Europäisches Patentamt

**European Patent Office**

Office européen des brevets

(19)

(11) Numéro de publication: **0 021 998**
**B1**

(12) **FASCICULE DE BREVET EUROPEEN**

(45) Date de publication du fascicule du brevet:
**30.05.84**

(51) Int. Cl.³: **G 02 C 13/00,** G 01 B 11/08

(21) Numéro de dépôt: **80400903.3**

(22) Date de dépôt: **19.06.80**

(54) **Appareil pour la détermination du diamètre de verres correcteurs de lunettes.**

(30) Priorité: **19.06.79 FR 7915702**

(43) Date de publication de la demande:
**07.01.81 Bulletin 81/1**

(45) Mention de la délivrance du brevet:
**30.05.84 Bulletin 84/22**

(84) Etats contractants désignés:
**DE GB IT NL**

(56) Documents cités:
**FR - A - 1 491 018**
**FR - A - 1 604 128**
**US - A - 3 804 528**
**US - A - 4 099 881**

(73) Titulaire: **Negroni, Jean Louis, 16, Boulevard des Alliés,**
**F-94600 Choisy-le-Roi (FR)**

(72) Inventeur: **Negroni, Jean Louis, 16, Boulevard des Alliés,**
**F-94600 Choisy-le-Roi (FR)**

(74) Mandataire: **Thevenet, Jean-Bruno et al, Cabinet BEAU**
**DE LOMENIE 55 rue d'Amsterdam, F-75008 Paris (FR)**

## Description

La présente invention a pour objet un appareil pour la détermination du diamètre de verres correcteurs adaptables à une monture de lunettes.

Les verres correcteurs de lunettes fabriqués présentent, en général, un contour circulaire et les opticiens doivent ensuite adapter chaque verre à la forme de monture choisie par leurs clients. Un problème particulier nait du fait que lorsqu'un client a choisi un type de monture, l'opticien ne dispose pas encore des verres correcteurs bruts qu'il doit d'abord commander chez le fabricant pour ensuite les tailler et les adapter à la monture choisie. Pour des raisons d'économie évidentes, il convient de choisir, parmi les divers calibres de verres correcteurs d'un type donné, le verre correcteur dont le diamètre est le plus faible possible mais qui permet de remplir complètement le cercle de la monture choisie, dont la forme est en général essentiellement non circulaire, tout en assurant un montage optiquement correct. Le choix et le positionnement d'un verre correcteur dépend ainsi de la monture choisie et doivent également prendre en compte des facteurs liés à l'usager, comme par exemple la valeur du demi-écart pupillaire, qui est variable selon les individus. Il s'est avéré particulièrement difficile de déterminer de façon aisée, en présence d'un usager et d'une monture de lunette déterminés, le diamètre d'un verre correcteur de type choisi, alors même que les différents calibres de verres existants ne sont pas à la disposition du praticien pour autoriser des essais des différents calibres susceptibles de convenir.

On a déjà proposé divers procédés et dispositifs susceptibles de permettre la détermination du diamètre utile des verres de lunettes à adapter à une monture choisie, en fonction d'un usager déterminé. Ainsi, selon un premier système connu, un dispositif de mesure comprenant des éléments mobiles et un cadre guide dont la forme est comparable à celle d'une monture de lunettes est fixé sur la monture elle-même et s'utilise sur le patient. Des éléments du dispositif de mesure sont mobiles verticalement et horizontalement pour superposer un repère à la pupille du patient et des repères en arcs de cercle permettent de déterminer le diamètre de verre utile. Un tel système présente toutefois des inconvénients car il est relativement fragile et implique de réaliser un nombre d'opérations assez longues sur le patient lui-même, ce qui est relativement peu commode. Par ailleurs, la fixation du cadre guide du dispositif de mesure sur la monture de lunettes elle-même n'est pas adaptée aux montures sans drageoir. Ce dispositif de mesure connu, qui est adapté aux verres progressifs, n'est pas utilisable pour les verres à double ou triple foyer et entraine des manipulations trop longues lorsqu'il s'agit de choisir des verres unifocaux.

Il est également connu d'utiliser un jeu de disques circulaires tronqués, en matière plastique transparente, munis de repères et prévus pour correspondre à différents diamètres de verres correcteurs bruts standards. Les disques circulaires tronqués sont superposés successivement à la monture de lunettes choisie, tandis que cette dernière est elle-même portée par l'utilisateur. Le système est également assez peu commode car il implique de faire des superpositions successives de disques et d'une monture de lunettes alors que cette dernière est elle-même portée par un usager, ce qui reste assez incommode.

La présente invention a précisément pour objet de remédier aux inconvénients précités et de permettre de déterminer de façon simple et rapide le diamètre de verres approprié à une monture de lunettes et à un individu en occasionnant un minimum de gêne pour l'usager.

L'invention a encore pour objet de proposer un appareil de mesure qui soit utilisable pour déterminer le diamètre d'une grande variété de type de verres différents, notamment des verres unifocaux, bifocaux, progressifs.

Ces buts sont atteints grâce à un appareil du type mentionné au début qui, conformément à l'invention, comprend au moins un socle muni a) d'une échelle de mesure linéaire symétrique, b) de moyens de guidage parallèles à ladite échelle de mesure, et c) d'une surface de base, d'un support d'appui et de moyens de centrage pour maintenir une monture de lunettes dans une position prédéterminée dans un plan de référence parallèle à ladite échelle de mesure et de façon symétrique par rapport à un plan perpendiculaire audit plan de référence et passant par l'axe médian de ladite échelle de mesure symétrique, et comprenant en outre au moins un chariot coulissant sur lesdits moyens de guidage devant ladite échelle de mesure et ledit plan de référence, ledit chariot comprenant une première partie munie d'une surface réceptrice plane parallèle à ladite échelle de mesure, faisant un angle par rapport audit plan de référence, et adaptée pour recevoir des plaques amovibles munies de repères et lignes figurant au moins le contour d'un ou de plusieurs types de verres correcteurs bruts, et une deuxième partie équipée d'un miroir semi-réfléchissant placé dans le plan bissecteur du dièdre déterminé par ladite surface réceptrice et ledit plan de référence.

Selon un exemple particulier de réalisation, le miroir semi-réfléchissant est incliné d'environ 45° par rapport d'une part au plan de référence et d'autre part à la surface réceptrice.

De préférence, la surface de base de réception de la monture de lunettes est sensiblement parallèle à ladite surface réceptrice du chariot.

Le support d'appui de la monture de lunettes comprend un cadre qui est fixé sur la surface de base et définit ledit plan de référence.

Les moyens de centrage pour maintenir la monture de lunettes de façon symétrique par rapport à un plan perpendiculaire au plan de référence et passant par l'axe médian de l'échelle de mesure comprennent un support réglable déplaçable parallèlement au plan de référence.

Selon une caractéristique de la présente invention, les plaques amovibles sont réalisées en matière plastique transparente.

Une échelle de mesure est formée sur la surface réceptrice des plaques amovibles.

Dans ce cas, il est avantageux que l'échelle de mesure formée sur la surface réceptrice des plaques amovibles puisse être déplacée dans son plan dans un sens perpendiculaire au sens de déplacement du chariot coulissant.

Afin de faciliter la visualisation, une source lumineuse est disposée dans le chariot coulissant, sous la surface réceptrice des plaques qui est elle-même transparente.

Une source lumineuse est disposée dans le socle et coopère avec une surface réfléchissante pour éclairer ledit plan de référence.

On peut en outre prévoir des moyens de réglage de l'intensité de la lumière envoyée dans ledit plan de référence par la source lumineuse disposée dans le socle.

L'appareil selon l'invention permet ainsi d'effectuer des mesures précises de façon commode, du fait que la monture de lunettes est toujours disposée sur un support stable et que la combinaison de moyens mise en œuvre assure une visualisation totale de tous les facteurs à prendre en compte pour la détermination du diamètre adéquat d'un type de verre en fonction d'une monture de lunettes déterminée.

D'autres caractéristiques et avantages de l'invention apparaitront mieux à la lecture de la description qui fait suite d'un mode particulier de réalisation de l'invention, en référence aux dessins annexés, sur lesquels:
- la fig. 1 est une vue en perspective d'un appareil conforme à l'invention,
- la fig. 2 est une vue de côté de l'appareil de la fig. 1, et
- la fig. 3 est une vue de détail montrant la superposition des images visualisées à travers le chariot 2 de l'appareil de la fig. 1.

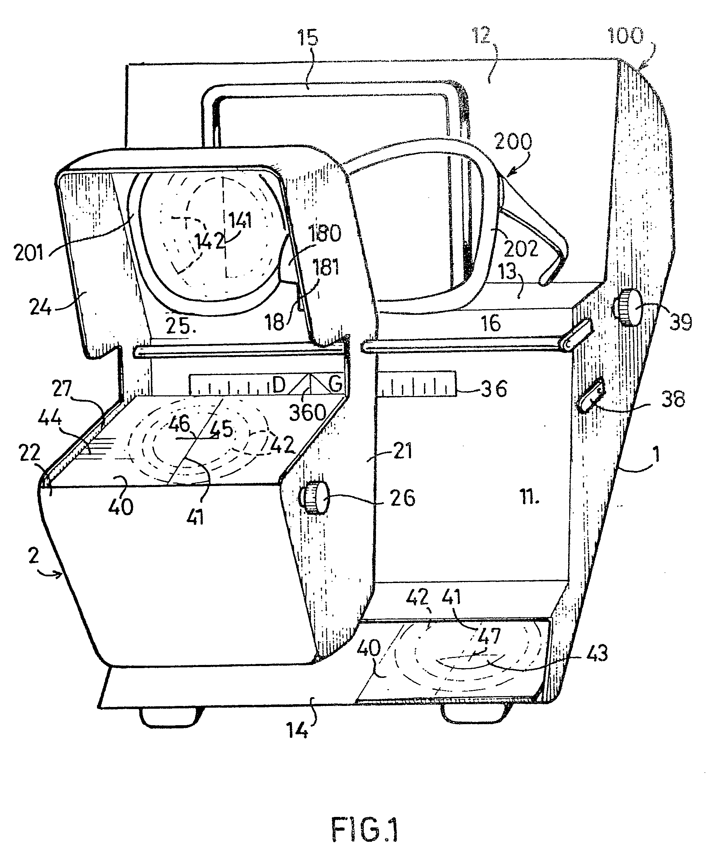

On voit sur la fig. 1 un appareil 100 comprenant un bâti 1 avec une face avant 11, une surface de base 13 destinée à recevoir une monture de lunettes 200, et un capot arrière 12 dont la partie interne forme un écran réflecteur. Un cadre d'appui 15 est monté sur la surface de base 13 et permet de retenir la monture 200, qui repose sur la surface de base 13, dans un plan sensiblement parallèle au plan du cadre 15.

Une échelle de mesure graduée 36 est apposée sur la face frontale 11 du bâti 1, en dessous du plan de base 13. L'échelle de mesure 36, qui est parallèle à la fois au plan de base 13 et au plan de référence déterminé par le cadre 15, est symétrique par rapport à une origine 360 qui détermine l'axe de l'appareil. Des moyens de centrage 18 sont disposés au-dessus de la surface de base 13 et sont destinés à maintenir la partie médiane de la monture 200 sur un axe passant par l'origine 360 et perpendiculaire à l'échelle de mesure 36. Les moyens de centrage 18 peuvent comprendre par exemple une tête 180 qui vient se placer entre les deux cercles 201, 202 de la monture 200, sous le pont de liaison 203, afin d'empêcher tout jeu dans le sens latéral pour la monture 200. Les moyens de centrage 18 sont réglables en hauteur et la position de la tête 180, montée sur la tige 181, peut être commandée par la manette 38, afin de s'adapter aux différentes formes et tailles de monture et fixer la position axiale de la monture 200 sans empêcher que les deux cercles 201, 202 de la monture reposent sur la surface de base 13.

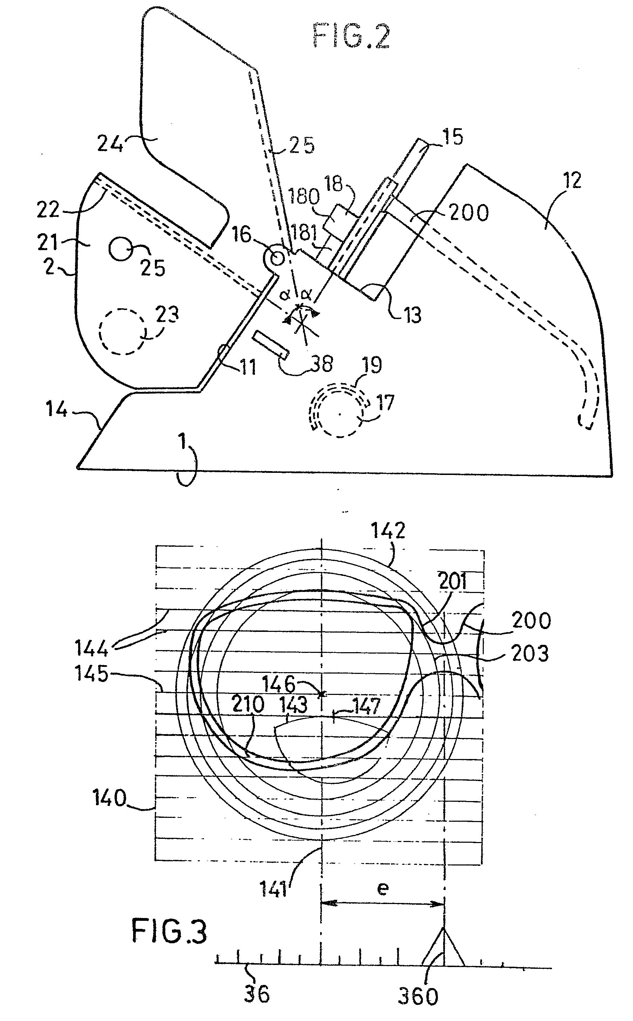

Une lampe 17 (fig. 2) est avantageusement disposée dans le bâti 1 afin d'éclairer la surface réfléchissante interne du capot 12, et par suite éclairer la surface de référence constituée par le plan de la monture 200 parallèle au cadre 15. Un capot opaque 19 peut être manœuvré à l'aide du bouton 39 pour régler la quantité de lumière envoyée sur l'écran réflecteur du capot 12. Naturellement, l'intensité de la lumière émise par la lampe 17 peut encore être réglée directement en agissant sur l'alimentation électrique, à l'aide d'un rhéostat par exemple.

Un chariot 2 est monté sur la partie avant de l'appareil, devant la face frontale 11, la surface de base 13 et la monture 200. Le chariot 2 peut coulisser sur un guide 16 parallèlement à la face avant 11 du bâti 1 et à l'échelle de mesure 36. Le chariot 2 comporte un corps inférieur 21 présentant une surface réceptrice supérieure 22, et un auvent supérieur 24 présentant deux branches latérales entre lesquelles est inséré un miroir semi-réfléchissant 25. Le chariot 2 est ouvert sur ses faces avant et arrière au niveau de l'auvent supérieur 24 pour permettre une visualisation à travers le miroir réfléchissant 25, ainsi que dans une partie médiane pour laisser apparaitre l'échelle de mesure 36 devant laquelle peut circuler le chariot 2.

Le miroir 25 est situé dans le plan bissecteur du dièdre constitué d'une part par le plan de référence du cadre 15 sur lequel s'appuie une monture 200 et d'autre part, par la surface réceptrice 22 située sur le dessus du corps inférieur 21 du chariot 2. Selon un exemple avantageux, l'angle entre le miroir 25 et le plan de référence du cadre 15, ou la surface réceptrice 22 est d'environ 45°.

La surface réceptrice 22 est de préférence constituée par une plaque transparente, par exemple en verre ou en matière plastique et est destinée à recevoir une plaque amovible, telle que 40 qui est également de préférence transparente et est réalisée par exemple en matière plastique. Une plaque telle que 40 comprend un axe longitudinal 41 et diverses lignes 42 figurant les contours de verres bruts standards de différents diamètres. L'image de la plaque 40 est réfléchie par le miroir semi-transparent 25 et se superpose à la monture de lunettes 200 pour former, pour un observateur placé devant le miroir 25 des lignes virtuelles 141, 142 identiques aux lignes 41, 42. Dans le cas où la surface réceptrice 22 du corps inférieur 21 du chariot 2 et les plaques 40 sont toutes deux transparentes, une lampe 23 disposée à l'intérieur du corps inférieur 21 peut éclairer une plaque 40 et faciliter l'observation à travers le miroir semi-transparent 25 qui d'une part renvoie à l'observateur l'image de la plaque 40 et d'autre part laisse apparaitre la monture 200. L'équilibre entre l'éclairage de la monture et de la plaque 40 est aisément réalisé a l'aide du bouton de manœuvre 39 agissant sur la lampe 17.

La surface réceptrice 22 du corps de chariot 21 est avantageusement elle-même munie de lignes 44 formant échelle de mesure, qui se superposent aux lignes ou repères formés sur les plaques 40. Selon un mode de réalisation particulier, les lignes 44 superposées à la surface réceptrice 22 peuvent être déplacées dans le plan de ladite surface, à l'aide du bouton de réglage 26, notamment dans un sens perpendiculaire au sens de déplacement du chariot coulissant. Ceci accroit la commodité des mesures.

Comme on peut le voir sur la fig. 1, la partie inférieure 14 de l'appareil 100 peut servir de tiroir de rangement pour les plaques 40 non utilisées.

Le fonctionnement et l'utilisation de l'appareil de mesure selon l'invention seront maintenant expliqués de façon détaillée en référence aux figs 1 et 3.

On considère d'abord que, de façon classique, on a mesuré sur l'usager la valeur de son demi-écart pupillaire ainsi que, dans le cas où il s'agit d'installer des verres multifocaux ou progressifs, la distance entre la pupille et le rebord intérieur de la partie inférieure du cercle de la monture choisie. Jl reste alors, sur la base de ces données, et compte tenu de la puissance de verre choisie, et du type de verres, à déterminer le diamètre de verre brut adapté pour être monté dans les cercles de la monture choisie. L'appareil selon l'invention permet de procéder à cette détermination avec la monture choisie, sans que des opérations d'essai ou de mesure supplémentaires aient à être effectuées sur l'usager, ou sur la monture portée par l'usager.

La monture choisie est d'abord posée sur la tête 180 des moyens de centrage 18 et adossée contre le cadre 15 parallèlement à celui-ci. La monture est alors abaissée sur la surface de base 13 jusqu'à ce que les deux cercles 201, 201 reposent bien d'aplomb sur la surface 13. La monture est ainsi parfaitement centrée par rapport à l'axe passant par l'origine 360 de l'échelle de mesure fixe 36. On place alors sur la surface réceptrice 22 du chariot 2 une plaque 40 portant des lignes et repères correspondant au type de verre qui doit être installé sur la monture de lunettes.

Chaque plaque 40 est rectangulaire et plane et comprend, outre un axe longitudinal 41, une repère 46 correspondant au centre optique et divers cercles 42 correspondant à des diamètres de verres standards, par exemple 50, 60, 65, 70, 75 mm. Chaque plaque 40 porte en outre, à l'intérieur des cercles, des repères qui dépendent du type de verre. Ces repères supplémentaires 43, 45, 47 n'existent pas dans le cas de verres unifocaux, mais sont nécessaires dans le cas de verres multifocaux ou progressifs et permettent de positionner correctement un cercle correspondant à un verre fictif, par rapport à la monture de lunettes, en tenant compte des positions repérées au préalable de la pupille de l'usager par rapport à cette monture.

On considérera à titre d'exemple la détermination d'un diamètre de verre à double foyer à monter sur le cercle droit 201 d'une monture de lunettes 200 (fig. 3). Une plaque 40 correspondant aux verres à double foyer est alors disposée sur la surface réceptrice 22 du chariot 2. La monture de lunettes est disposée, comme indiqué plus haut, contre le cadre 15, et son pont central 203 repose sur la tête de centrage 180 qui est abaissée jusqu'à ce que les parties inférieures des cercles de la monture reposent bien d'aplomb sur la surface 13. Le chariot 2 est alors déplacé devant l'échelle graduée 36 de la face avant 11 de l'appareil. L'échelle de mesure 36 est visible en dessous du miroir semi-transparent 25 et, de façon préférentielle, apparait à travers le chariot 2 immédiatement au dessus de la surface réceptrice 22 du corps inférieur 21. Le chariot peut alors être positionné aisément de manière que, sur l'échelle de mesure 36, la distance entre l'origine 360 et le repère situé en face de l'axe longitudinal 41 de la plaque 40, corresponde au demi-écart pupillaire e de l'usager. Les positions relatives de la monture et de la plaque 40 sont alors bien définies dans le sens latéral et les images réelle et virtuelle du cercle 201 et de la plaque 40 se superposent derrière l'écran constitué par le miroir 25. Dans le cas de verres unifocaux, la seule opération restant à effectuer consiste à comparer le cercle de monture 201 et les cercles 142 représentatifs de verres pour déterminer le cercle de plus petit diamètre permettant de couvrir toute la surface du cercle de monture 201. Dans le cas de verres à double foyer, le positionnement en hauteur des verres n'est pas indifférent. C'est pourquoi il convient d'abord d'amener, à l'aide du bouton de réglage 26, l'image 144 d'une graduation de référence de l'échelle de mesure 44 de la surface réceptrice 22, au niveau du rebord interne 210 de la partie inférieure du cercle 201 de la monture 200. La position de la pupille par rapport au rebord inférieur 210 peut alors être aisément situé, grâce aux lignes 144, et un glissement de la plaque 40 sur la surface réceptrice 22 permet de déplacer l'image 140 de la plaque 40 par rapport aux lignes repères 144 et à la monture 200 afin de positionner correctement les repères 143, 145. Il suffit alors, comme dans le cas précédent de verres unifocaux, de repérer le cercle 142 de diamètre juste suffisant pour couvrir toute la surface interne du cercle de monture 201.

Les opérations de mesure effectuées sur un cercle droit 201 de monture peuvent être réalisées de la même manière sur le cercle gauche 202. Il suffit de déplacer le chariot 2 de l'autre côté du repère central 360 et d'installer sur la surface réceptrice 22 une plaque 40 correspondant à des verres gauche, dans le cas où le type de verre dont le diamètre est à déterminer n'est pas unifocal.

L'appareil selon l'invention peut être utilisé pour déterminer le diamètre de types de verres très divers, sans disposer de ces verres au préalable, mais simplement de plaques bon marché, par exemple, en matière plastique faciles à réaliser, puisqu'il suffit qu'elles portent un nombre limité de repères caractéristiques du type de verre à choisir.

Les manipulations visant à superposer l'image 140 d'une plaque 40 sur une monture 200 sont particulièrement simples puisque, dès lors que la monture est placée sur l'appareil, il suffit de déplacer selon deux directions perpendiculaires, par simple coulissement le long de guides 16 et 27 respectivement le chariot 2 par rapport au socle 1 de l'appareil et la plaque 40 par rapport au chariot 2. En particulier, dans le cas de verres unifocaux, il suffit d'abord de positionner le chariot 2 pour que l'axe longitudinal 41 d'une plaque 40 soit à une distance convenable e de l'origine 360, puis de faire glisser progressivement la plaque 40 entre les rebords guides 27 du corps inférieur 21 du chariot 2, qui sont parallèles audit axe 41 pour déterminer sur le miroir 25 le plus petit cercle 142 capable d'inclure entièrement le cercle de monture 201.

Il est préférable, pour la commodité des manipulations, que le miroir semi-transparent 25 soit situé sensiblement dans un plan vertical, ou peu incliné par rapport à la verticale, et que la surface de base 13 ainsi que la surface réceptrice 22 soient inclinées de sorte que leur partie avant est surélevée et qu'une monture de lunette 200 et une plaque 40 puissent venir facilement en butée respectivement contre le cadre d'appui 15 et contre le fond du chariot 2 ou la face avant 11 du socle 1.

**Revendications**

1. Appareil pour la détermination du diamètre de verres correcteurs adaptables à une monture de lunettes, à l'aide de plaques amovibles (40) munies de repères et de lignes figurant au moins le contour (42) d'un ou de plusieurs types de verres correcteurs bruts, caractérisé en ce qu'il comprend au moins un socle (1) muni: a) d'une échelle de mesure (36) linéaire symétrique, b) de moyens de guidage (16) parallèles à ladite échelle de mesure et c) d'une surface de base (13), d'un support d'appui (15) et de moyens de centrage (18) pour maintenir une monture de lunettes (200) dans une position prédéterminée dans un plan de référence parallèle à ladite échelle de mesure (36) et de façon symétrique par rapport à un plan perpendiculaire audit plan de référence et passant par l'axe médian de ladite échelle de mesure symétrique, et en ce qu'il comprend en outre au moins un chariot (2) coulissant sur lesdits moyens de guidage (16) devant ladite échelle de mesure et ledit plan de référence, ledit chariot comprenant une première partie (21) munie d'une surface réceptrice plane (22) parallèle à ladite échelle de mesure, faisant un angle par rapport audit plan de référence, et adaptée pour recevoir lesdites plaques amovibles (40) munies de repères et de lignes, et une deuxième partie (24) équipée d'un miroir semi-réfléchissant (25) placé dans le plan bissecteur du dièdre déterminé par ladite surface réceptrice et ledit plan de référence.

2. Appareil selon la revendication 1, caractérisé en ce que le miroir semi-réfléchissant (25) est incliné d'environ 45° par rapport d'une part, au plan de référence, et, d'autre part, à la surface réceptrice (22).

3. Appareil selon la revendication 1 ou la revendication 2, caractérisé en ce que la surface de base (13) de réception de la monture de lunettes est sensiblement parallèle à ladite surface réceptrice (22) du chariot (2).

4. Appareil selon l'une quelconque des revendications 1 à 3, caractérisé en ce que le support d'appui (15) de la monture de lunettes comprend un cadre qui est fixé sur la surface de base (13) et définit ledit plan de référence.

5. Appareil selon l'une quelconque des revendications 1 à 4, caractérisé en ce que les moyens de centrage (18) pour maintenir la monture de lunettes de façon symétrique par rapport à un plan perpendiculaire au plan de référence et passant par l'axe médian de l'échelle de mesure comprennent un support réglable déplaçable parallèlement au plan de référence.

6. Appareil selon l'une quelconque des revendications 1 à 5, caractérisé en ce que les plaques amovibles (40) sont réalisées en matière plastique transparente.

7. Appareil selon la revendication 6, caractérisé en ce qu'une échelle de mesure (44) est formée sur la surface réceptrice des plaques amovibles.

8. Appareil selon la revendication 7, caractérisé en ce que l'échelle de mesure (44) formée sur la surface réceptrice (22) des plaques amovibles (40) peut être déplacée dans son plan dans un sens perpendiculaire au sens de déplacement du chariot coulissant (2).

9. Appareil selon l'une quelconque des revendications 6 à 8, caractérisé en ce qu'une source lumineuse est disposée dans le chariot coulissant (2), sous la surface réceptrice (22) des plaques qui est elle-même transparente.

10. Appareil selon l'une quelconque des revendications 1 à 9, caractérisé en ce qu'une source lumineuse est disposée dans le socle (1) et coopère avec une surface réfléchissante (12) pour éclairer ledit plan de référence.

11. Appareil selon la revendication 10, caractérisé en ce qu'il comprend des moyens de réglage (39) de l'intensité de la lumière envoyée dans ledit plan de référence par la source lumineuse disposée dans le socle (1).

12. Appareil selon l'une quelconque des revendications 1 à 11, caractérisé en ce qu'il comprend plusieurs plaques amovibles (40) pouvant être placées successivement sur la surface réceptrice du chariot.

13. Appareil selon la revendication 12, caractérisé en ce que chaque plaque amovible (40) comprend des repères et lignes relatifs à des verres correcteurs de différents diamètres, mais d'un même type.

**Claims**

1. Apparatus for determining the diameter of corrective lenses adaptable to a spectacle frame, with removable plates (40) provided with reference marks and lines representing at least the outline (42) of one or more types of uncut corrective lenses, characterized in that it comprises at least one structure (1) provided with: a) a symmetrical linear measuring scale (36), b) guiding means (16) parallel to the said measuring scale and c) an underlying surface (13), a resting support (15) and centering means (18) to hold a spectacle frame (200) in a predetermined position relative to a reference plane parallel to the said measuring scale (36) and symmetrically with respect to a plane perpendicular to the said reference plane, crossing the middle axis of the said symmetrical measuring scale, and in that it further comprises at least one carriage (2) sliding on the said guiding means (16) in front of the said measuring scale and the said reference plane, forming an angle with the said reference plane, the said carriage comprising a first part (21) provided with a planar receiving surface (22), parallel to the said measuring scale, forming a dihedron angle with the said reference plane, and adapted to receive to said removable plates (4) provided with reference marks and lines, and a second part (24) equipped with a semi-reflector mirror (25) placed in a bisecting plane of the dihedron angle defined by the said receiving surface and the said reference plane.

2. The apparatus according to claim 1, characterized in that the semi-reflector mirror (25) is inclined so as to form an angle of approximately 45° with, on the one hand, the reference plane, and on the other hand, the receiving surface (22).

3. Apparatus according to claims 1 or 2, characterized in that the underlying surface (13) provided to receive the spectacle frame is substantially parallel to the said receiving surface (22) of the carriage (2).

4. Apparatus according to any one of claims 1 to 3, characterized in that the resting support (15) of the spectacle frame comprises a framework which is fitted on the underlying surface (13) and defines the said reference plane.

5. Apparatus according to any one of claims 1 to 4, characterized in that the centering means (18) provided to hold the spectacle frame symmetrically with respect to a plane perpendicular to the reference plane and crossing the middle axis of the measuring scale, comprise an adjustable support which is movable in parallel to the reference plane.

6. Apparatus according to any one of claims 1 to 5, characterized in that the removable plates (40) are made of transparent plastic.

7. Apparatus according to claim 6, characterized in that a measuring scale (44) is formed on the receiving surface of the removable plates.

8. Apparatus according to claim 7, characterized in that the measuring scale (44) formed on the receiving surface (22) of the removable plates (40) can be moved in its plane in a direction which is perpendicular to the direction in which the sliding carriage (2) moves.

9. Apparatus according to any one of claims 6 to 8, characterized in that a source of light is placed in the sliding carriage (2), under the surface (22) receiving the plates, which surface is also transparent.

10. Apparatus according to any one of claims 1 to 9, characterized in that a source of light is provided in the structure (1) and cooperates with a reflecting surface (12) to light up said reference plane.

11. Apparatus according to claim 10, characterized in that it comprises means for controlling (39) the intensity of the light sent into the said reference plane by the source of light provided in the structure (1).

12. Apparatus according to any one of claims 1 to 11, characterized in that it comprises a plurality of removable plates (40) which plates can be placed in succession on the receiving surface of the carriage.

13. Apparatus according to claim 12, characterized in that each removable plate (40) comprises reference marks and lines relative to corrective lenses of different diameters but of the same type.

**Patentansprüche**

1. Apparat zur Bestimmung des Durchmessers von an eine Brillenfassung anpassbaren Korrekturgläsern mit Hilfe von beweglichen Platten (40), die mit Markierungen und Linien versehen sind, die zumindest die Kontur (42) einer oder mehrerer Arten von unbearbeiteten Korrekturgläsern darstellen, dadurch gekennzeichnet, dass er zumindest einen Sockel (1) mit a) einer linearen, symmetrischen Messwertskala (36), b) zur Messwertskala parallel gerichteten Führungsmitteln (16) und c) einer Basisfläche (13), einer Stützauflage (15) und Zentriermitteln (18) zum Halten einer Brillenfassung (200) in einer vorbestimmten Position in einer parallel zur Messwertskala (36) verlaufenden Referenzebene und symmetrisch zu einer zur Referenzebene senkrechten und durch die Mittelachse der symmetrischen Messwertskala verlaufenden Ebene umfasst, und dass er weiters zumindest einen auf den Führungsmitteln (16) vor der Messwertskala und der Referenzebene verfahrbaren Wagen (2) umfasst, welcher Wagen einen ersten Abschnitt (21) aufweist, der mit einer ebenen, parallel zur Messwertskala verlaufenden Aufnahmefläche (22) versehen ist, die mit der Referenzebene einen Winkel einschliesst und zur Aufnahme der beweglichen, mit Markierungen und Linien versehenen Platten (40) ausgestaltet ist, und einen zweiten Abschnitt (24), der mit einem halbreflektierenden Spiegel (25) ausgestattet ist, welcher in der halbierenden Ebene des durch die Aufnahmefläche und die Referenzebene festgelegten V-Winkels (Dieders) liegt.

2. Apparat nach Anspruch 1, dadurch gekennzeichnet, dass der halbreflektierende Spiegel (25) gegenüber einerseits der Referenzebene und anderseits der Aufnahmefläche (22) um etwa 45° geneigt ist.

3. Apparat nach Anspruch 1 oder 2, dadurch gekennzeichnet, dass die Basisfläche (13) zum Aufnehmen der Brillenfassung im wesentlichen parallel zur Aufnahmefläche (22) des Wagens (2) verläuft.

4. Apparat nach einem der Ansprüche 1 bis 3, dadurch gekennzeichnet, dass die Stützauflage (15) für die Brillenfassung einen Rahmen umfasst, der auf der Basisfläche (13) fixiert ist und die Referenzebene festlegt.

5. Apparat nach einem der Ansprüche 1 bis 4, dadurch gekennzeichnet, dass die Zentriermittel (18) zum Halten der Brillenfassung symmetrisch bezüglich einer zur Referenzebene senkrechten und durch die Mittelachse der Messwertskala verlaufenden Ebene eine parallel zur Referenzebene verschiebbare, einstellbare Stütze aufweisen.

6. Apparat nach einem der Ansprüche 1 bis 5, dadurch gekennzeichnet, dass die beweglichen Platten (40) aus transparentem Plastikmaterial hergestellt sind.

7. Apparat nach Anspruch 6, dadurch gekennzeichnet, dass eine Messwertskala (44) auf der Aufnahmefläche der beweglichen Platten gebildet ist.

8. Apparat nach Anspruch 7, dadurch gekennzeichnet, dass die auf der Aufnahmefläche (22) der beweglichen Platten (40) gebildete Messwertskala in ihrer Ebene in zur Verschieberichtung des verfahrbaren Wagens (2) senkrechter Richtung verschiebbar ist.

9. Apparat nach einem der Ansprüche 6 bis 8, dadurch gekennzeichnet, dass eine Lichtquelle im verfahrbaren Wagen (2) unter der Aufnahmefläche (22) der Platten, die selbst transparent ist, vorgesehen ist.

10. Apparat nach einem der Ansprüche 1 bis 9, dadurch gekennzeichnet, dass eine Lichtquelle im Sockel (1) vorgesehen ist und zum Erleuchten der Referenzebene mit einer reflektierenden Fläche (12) zusammenwirkt.

11. Apparat nach Anspruch 10, dadurch gekennzeichnet, dass er Mittel (39) zum Einstellen der Lichtstärke des von der im Sockel (1) angeordneten Lichtquelle auf die Referenzebene entsendeten Lichts umfasst.

12. Apparat nach einem der Ansprüche 1 bis 11, dadurch gekennzeichnet, dass er mehrere bewegliche Platten (40) umfasst, die nacheinander auf die Aufnahmefläche des Wagens plazierbar sind.

13. Apparat nach Anspruch 12, dadurch gekennzeichnet, dass jede bewegliche Platte (40) Markierungen und Linien für Korrekturgläser mit verschiedenen Durchmessern, aber derselben Type aufweist.

FIG.1

FIG.2

FIG.3

0 021 998

11